# EUROPEAN PATENT SPECIFICATION

(11) **EP 2 706 221 B1**
(45) Date of publication and mention of the grant of the patent: **13.07.2016**
(21) Application number: 12183513.6
(22) Date of filing: 07.09.2012
(51) Int. Cl.: F02M 51/06, F02M 61/20, F16F 1/32, F02M 63/00

(54) **Valve assembly for a fuel injector and fuel injector**
Ventilanordnung für eine Brennstoffeinspritzdüse und Brennstoffeinspritzdüse
Ensemble de soupape destiné à un injecteur de carburant et injecteur de carburant

(43) Date of publication of application: 12.03.2014
(73) Proprietor: Continental Automotive GmbH, 30165 Hannover (DE)
(72) Inventor: Romeo, Ileana, 58100 Grossetto (IT); Soriani, Matteo, 57121 Livorno (IT); Lenzi, Francesco, 57128 Livorno (IT)

(56) References cited:
- EP-A1- 1 845 254
- EP-A2- 0 851 116
- WO-A1-00/79120
- US-A1- 2001 015 417

## Description

The present disclosure relates to a valve assembly for a fuel injector and to a fuel injector.

Fuel injectors may be used for example in internal combustion engines for dosing fuel into an intake manifold of the internal combustion engine or directly to the combustion chamber of a cylinder of the internal combustion engine. The fuel injectors may be operable to dose the fuel under high pressures, for example in the range of up to 200 bar in the case of gasoline engines and of 2000 bar or more in the case of diesel engines.

EP 0851116 A2 discloses a metering valve which has a shutter for a discharge conduit, and an electromagnet for controlling an armature disconnected from a respective stem and sliding along the stem by means of a respective sleeve. The stem is pushed by a first spring to keep the shutter in the closed position. The armature is held axially resting against the stem by a second spring preloaded between the armature and an annular shoulder of the stem, so as not to affect the action of the first spring.

It is an object of the present disclosure to specify a valve assembly for a fuel injector and a fuel injector which allow particularly precise dosing of the fuel.

This object is achieved by a valve assembly for a fuel injector having the features of claim 1. Further embodiments and developments of the valve assembly and the fuel injector are specified in the dependent claims.

According to one aspect, a valve assembly for a fuel injector is specified. According to another aspect, a fuel injector is specified, the fuel injector having the valve assembly. The fuel may, for example, be one of gasoline, diesel, and/or ethanol.

The valve assembly comprises a valve body. The valve body has a longitudinal axis. The valve assembly further comprises a valve needle, an armature and an elastic member.

In one embodiment, the valve body has a cavity. The cavity may extend - in particular in longitudinal direction - from a fuel inlet opening of the valve body to a fuel outlet opening of the valve body. The fuel outlet opening is preferably comprised by an injection nozzle of the valve body. The valve needle and the armature are preferably arranged in the cavity.

The valve needle is axially moveable in a first direction and in a second direction, opposite the first direction, with respect to the valve body. The needle is in particular axially moveable between a closing position and further positions, for example between a closing position and an opening position. The needle may have a tip, which in particular sealingly rests on a valve seat of the valve body when the needle is in the closing position in order to prevent fuel from leaving the valve assembly through the fuel outlet opening. The needle is for example axially moveable away from the closing position - in particular towards the opening position - in the first direction.

The armature is also axially moveable in the first and in the second direction with respect to the valve body. It is biased in the first direction by means of the elastic member. In other words, the elastic member exerts a force on the armature, the force being directed in the first direction.

The needle, when moving in the second direction to the closing position, is operable to mechanically interact with the armature for moving the armature in the second direction to a first position against the bias of the elastic member. In other words, the armature is coupled to the needle in such fashion, that the needle exerts a force in the second direction on the armature to move the armature in the second direction when the needle moves in the second direction to the closing position. The needle in particular takes the armature with it to the first position when it is moving in the second direction to the closing position. Expediently, the armature may reach the first position when the needle reaches the closing position.

For example, the needle has a flange - sometimes also called a collar - which is operable to transfer a force to the armature in the second direction. The flange may be manufactured separately from a main barrel or cylinder of the needle and rigidly fixed to the barrel or cylinder so that relative axial movement is prevented. For example, the flange may abut the armature when the needle is moving in the second direction. The flange and the elastic member may in particular be arranged on opposite sides of the armature.

In one embodiment, the valve assembly comprises a spring which is operable to exert a force on the needle for moving the needle in the second direction to the closing position. The needle may expediently be biased with a given force in the second direction when it is in the closing position, for example by means of the spring.

The armature is in particular operable to interact mechanically with the needle to move the needle in the first direction, away from the closing position and in particular towards the opening position, when the armature moves in the first direction from its first position. For example, the armature interacts with the needle via the flange.

The armature is also axially moveable with respect to the needle so that, at least when the needle is in the closing position, the armature is moveable from the first position further in the second direction to a second position against the bias of the elastic member.

The elastic member has a plurality of beams. Each beam has a first end and a second end. The first end and the second end of each beam are axially offset with respect to each other. The first end and the second end of each beam are also radially offset with respect to each other. The beams in particular extend obliquely with respect to the longitudinal axis. The main extension directions of the beams in top view along the axis are in particular radial directions, having the longitudinal axis as a center.

The armature is operable to reduce an axial offset between the first end and the second end of each beam when it is moving from the first to the second position. In particular, the armature is operable to bend the beams when moving from the first towards the second position. In this way, the armature is operable to compress the elastic member.

In an advantageous embodiment, the valve assembly is configured for dissipating kinetic energy of the armature, when the armature is moving from the first towards the second position by means of mechanical interaction of the elastic member of the armature and/or the needle and/or the fuel. For example, the valve assembly may be configured to dissipate kinetic energy by means of at least one of the following: friction between the beams and the armature, friction between the beams and the needle, compression and/or displacement of fuel by means of deformation of the beams.

When the valve assembly is operated for bringing the valve assembly from an opened state to a closed state - also referred to as closing event -, the needle is moved in the second direction to the closing position. For example, the needle is biased in the second direction by a spring which mechanically interacts with the needle to move it in the second direction towards the closing position during the closing event.

On its way to the closing position, the needle takes the armature with it in the second direction to the first position. When the needle has reached the closing position and the armature, consequently, has reached the first position, movement of the needle in the second direction may be stopped by interaction with the valve body. For example, the tip of the needle hits the valve seat when the needle reaches the closing position.

The armature reaches the first position with a certain velocity, corresponding to a given kinetic energy. Thus, since it is axially moveable with respect to the needle, the armature moves further in the second direction from the first position to the second position. Due to this movement against the bias of the elastic member, the elastic member is compressed by the deformation of the beams. In this way, the kinetic energy, which the armature has in the first position, is partially converted into a given potential energy of the elastic member. Another part of the kinetic energy is dissipated, for example by friction between the elastic member and the armature.

The armature comes to a rest when it has reached the second position. The compressed elastic member subsequently forces the armature to move back in the first direction to the first position.

The armature, when reaching the first position again, in particular mechanically interacts with the needle to transfer a force to the needle in the first direction. For example, the armature hits the flange of the needle when it returns to the first position. Since its kinetic energy has been partially dissipated by means of interaction with the elastic member, the force exerted by the armature on the needle during this armature-needle bounce is advantageously reduced. In this way, the danger is advantageously reduced that the valve reopens and that fuel is dispensed unintentionally through the fuel outlet opening. Therefore, a particularly precise dosing of the fuel is achievable.

In one embodiment, the elastic member is provided to bias the armature with a force in the first direction, the force being independent of an axial position of the armature. In other words, for example by means of the deformable beams, the spring force of the elastic member may be substantially or completely independent of the compression of the elastic member in axial direction. In particular it is substantially or completely independent of the axial offset of the first and the second ends at least under operating conditions of the valve assembly.

The operation of the valve assembly may be particularly reliable and reproducible in this way. For example, the valve assembly is particularly insensitive with respect to production tolerances or mounting tolerances of its constituent parts which may lead to different absolute values of the respective axial offset between the first and second ends of the beams.

The elastic member radially surrounds the needle and is formed in such fashion that the first ends of the beams are facing the needle and are arranged at a radial distance from the needle when the armature is in the first position. The beams are elastically deformable in such fashion that the radial distance between the first ends and the needle decreases when the armature moves from the first towards the second position. In an advantageous development the first ends or at least one of the first ends abuts the needle when the armature is in the second position. In this way, particularly effective dissipation of the kinetic energy of the armature is possible by means of friction between the beams and the needle.

In one embodiment, the beams are arranged evenly spaced around the needle in a top view along the longitudinal axis. This allows for a well balanced force distribution in angular direction around the longitudinal axis.

In one embodiment, the elastic member has the basic shape of a conical shell with an upper inner edge and a lower outer edge. The upper inner edge preferable faces the armature. The lower outer edge preferably resides against the valve body. It is also conceivable that the upper inner edge resides against the valve body and the lower outer edge faces, and in particular abuts, the armature. The expressions "upper edge" and "lower edge" in particular refer to the position with respect to the tip of the cone of which the conical shell is a section. The upper edge adjoins the tip, while the lower edge is remote from the tip.

Preferably, the upper inner edge of the conical shell is discontinuous. It is expediently formed by the first ends of the beams. The elastic member, for example, has a plurality of beams and a plurality of slots. The beams and slots are arranged in angular direction around the longitudinal axis in alternating fashion, i.e. each two neighboring beams being separated from one another by one of the slots.

The elastic member may also have a circumferential ring section, which is in particular a continuous section that extends completely circumferentially around the longitudinal axis and - in top view along the longitudinal axis - around the beams. The ring section expediently comprises the lower outer edge. The beams are preferably anchored to the ring section at their second ends. For example, the beams and the ring section are formed as a one piece element and the beams merge with the ring section at their second ends.

Further advantages, advantageous embodiments and developments of the valve assembly and of the fuel injector will become apparent from the exemplary embodiments which are described below in association with schematic figures.

In the figures:
- Figure 1: shows a schematic cross sectional view of a valve assembly according to an exemplary embodiment in an opened state,
- Figure 2: shows a schematic cross section of the valve assembly of figure 1 in a closed state,
- Figure 3: shows the valve assembly of figure 2 in a further state during the closing event,
- Figure 4: shows the elastic member of the valve assembly of figures 1, 2, and 3 in a perspective view, and
- Figure 5: shows the load - deflection curve of the elastic member of figure 4.

In the exemplary embodiments and figures, identical elements are provided with the same reference symbols. The figures are not regarded to be true to scale. Rather, individual elements in the figures may be exaggerated in size for better representability and/or better understanding.

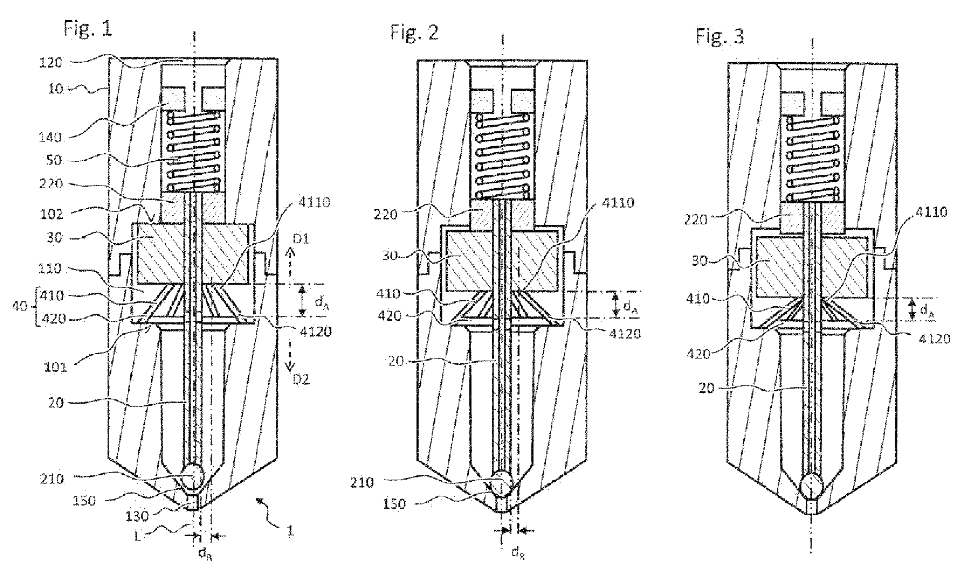

Figures 1, 2 and 3 show a valve assembly according to an exemplary embodiment in an opened state (figure 1) in a closed state (figure 2) and in a state during the closing event (figure 3).

The valve assembly 1 comprises a valve body 10 having a longitudinal axis L. The valve body 10 comprises a cavity 110. The cavity 110 extends through the valve body 10 in axial direction L from a fuel inlet opening 120 of the valve body 10 to the injection nozzle 130 of the valve body 10, the injection nozzle 130 having a fuel outlet opening.

In the cavity 110, a valve needle 20 is arranged. The needle 20 is axially moveable in the cavity 110 with respect to the valve body 10. The valve needle 20 has a tip 210 which faces the injection nozzle 130. The tip 210 may be, for example, ball-shaped. At its end remote from the injection nozzle 130 and facing the fuel inlet opening 120, the valve needle 20 has a flange 220. The flange 220 may be operable to guide the valve needle in the cavity 110. Between the tip 210 and the flange 220 the valve needle may, for example, comprise a tubular section. The tubular section may have a recess which is extending in axial direction L and which is bounded by a side wall of the tubular section. Openings may be provided in the side wall, so that fuel may flow through the recess to the outside of valve needle 20.

The valve assembly 1 further comprises an armature 30. The armature 30 is arranged in the cavity. In the present embodiment, it is ring-shaped with a central opening through which the valve needle 20 extends.

In addition, the valve assembly 1 comprises an elastic member 40. The elastic member 40 radially surrounds the valve needle 20 and is arranged in the cavity 110 of the valve body 10. The elastic member 40 in this and other embodiments may comprise of at least one metal or consist of at least one metal or alloy.

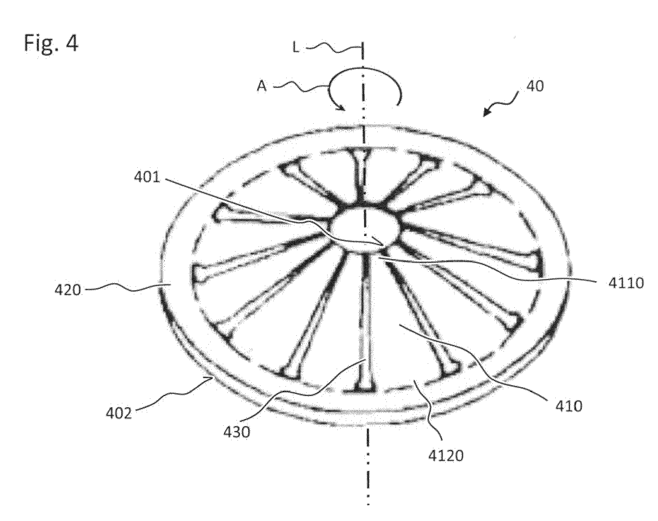

Figure 4 shows a schematic perspective view of the elastic member 40 of the present embodiment.

The elastic member 40 has the basic shape of a conical shell. It has an upper inner edge 401 and a lower outer edge 402. The upper inner edge 401 faces the armature 30 and the lower outer edge 402 resides against the valve body 10, specifically it resides against a first shoulder 101 of the cavity 110.

The lower outer edge 402 is comprised by a ring section 420. The ring section has its geometric center on the longitudinal axis L, for example. A main plane of extension of the ring section 420 may be arranged perpendicular to the longitudinal axis L. The ring section 420 extends completely circumferentially around the valve needle 20.

The elastic member 40 further has a plurality of beams 410, the beams emerging from the ring section 420 and extending to the upper inner edge 401. The beams 410 and the ring section 420 are formed as one piece in the present embodiment.

In particular, the upper inner edge 401 is represented by first ends 4110 of the beams 410. The first ends 4110 are in particular free ends of the beams 410. Each beam 410 also has a second end 4120 with which it is anchored with the ring section 420 and merges with the ring section 420. The first end 4110 of each beam 410 is axially offset from the second end 4120 of the beam 410 by a distance d_{A}.

The beams 410 are arranged uniformly around the needle 20 in a top view along the longitudinal axis L. In particular, the beams 410 are evenly spaced in an angular direction A - i.e. clockwise or counter clockwise - around the longitudinal axis L. In this way, slots 430 are formed between each two neighboring beams 410. The elastic member 40 is operable to bias the armature 30 in a first axial direction D1 with respect to the valve body 10. For example, the elastic member 40 resides on the first shoulder 101 of the valve body with its lower outer edge 402 and the first ends 4110 of the beams 410 are elastically deformed so that they are pressed against the armature 30 to exert a force in the first direction D1.

The valve needle 20, on the other hand, is biased in a second direction D2 along the longitudinal axis L, the second direction D2 being opposite to the first direction D1, by a spring 50 of the valve assembly 1. The spring is pre-loaded - for example by means of a calibration element 140 of the valve assembly 1 - so that the spring 50 is operable to exert a force in the second direction D2 on the valve needle.

In the closed state of the valve assembly 1 (see figure 2) the tip 210 of the needle is in a closing position. In the closing position, it resides against the valve seat 150 and is pressed against the valve seat 150 by means of the force exerted by the spring 50 on the needle 20 in the second direction D2.

The armature 30 is pressed against the flange 220 of the valve needle 20 by means of the bias exerted on the armature 30 in the first direction D1 by the elastic member 40. In this way, the armature 30 transfers a force in the first direction D1 on the valve needle 20.

When the valve assembly 1 is in the closed state, the magnitude of the force exerted by the spring 50 on the valve needle 20 in the second direction D2 exceeds the force transferred to the valve needle 20 in the first direction D1 by the armature 30 so that the tip 210 of the valve needle 20 is retained in its closing position residing against the valve seat 150. In this way, the injection nozzle 130 is sealed and fuel flow through the fuel outlet opening is prevented in the closed state of the valve assembly 1 as shown in figure 2.

In the following, a method for operating the valve assembly 1 is described in detail.

In order to move the needle away from the closing position (see figure 2) to further positions -in particular to an opening position as shown in figure 1 - the fuel injector may comprise an actuator assembly (not shown) provided for exerting an additional force in the first direction on the armature 30. For example, the actuator assembly is an electromagnetic actuator assembly comprising a solenoid for generating a magnetic force as the additional force. Such actuator assemblies are in principle known to the person skilled in the art and will not be described here in further detail. The magnitude of the additional force is selected such that the bias of the elastic member of 40 and the additional force of the actuator assembly together are operable to move the armature 30 in the first direction to the opening position against the bias of the spring 50.

When the actuator assembly is operated to generate the additional force, the armature 30 moves from its first position in the first axial direction D1 with respect to the valve body 10 and takes the valve needle 20 with it in the first direction D1 with respect to the valve body 10 by means of the mechanical interaction between the armature 30 and the flange 220 - in the present embodiment by means of the form fitting connection of the armature 30 with the flange 220.

In this way, the valve needle 20 is axially moved out of the closing position, so that a gap is created between the tip 210 of the valve needle 20 and the valve seat 150. Fuel may flow from the fuel inlet opening 120 of the valve body 10 through the cavity 110 - and in particular through the recess of the needle 20 - and through the gap to the injection nozzle 130 and may be dispensed through the fuel outlet opening of injection nozzle 130.

Movement of the armature 30 in the first direction may be limited by means of a second shoulder 102 of the valve body 10, for example. In the opened state of the valve assembly 1, the armature 30 may reside against the second shoulder 102, for example. In this way, the armature 30 may retain the valve needle 20 the opening position by means of the mechanical interaction with the flange 220.

To initiate the closing event for bringing the valve from the opened state to the closed state, the actuator assembly may be turned off, so that the additional is no longer generated by the actuator assembly. Thus, the force of the spring 50 exerted on the valve needle 20 in the second direction D2 dominates and the spring 50 accelerates the needle 20 in the second direction D2.

By means of interaction via its flange 220, the valve needle 20 takes the armature 30 with it in the second direction D2 towards the first position against the bias of the elastic member 40. The armature 30 in particular moves away from the second shoulder 102 in the present embodiment.

When moving in the second direction D2, the armature elastically deforms the beams 410 of the elastic member 40. Due to the deformation caused by the armature 30, the axial distance d_{A} between the first and second ends 4110, 4120 of each beam 410 decreases.

The movement of the valve needle 20 and the armature 30 in the second direction D2 continues until the valve needle 20 reaches the closing position, where the tip 210 contacts the valve seat 120. Further movement of the valve needle 20 is then prevented by the mechanical interaction with the valve body 10 so that the valve needle 20 comes to a rest in the closing position.

When the valve needle 20 reaches the closing position, armature 30 reaches its first position having a certain velocity corresponding to a first kinetic energy of the armature 30. The valve assembly 1 is configured in such way that the armature 30 is axially moveable in the second direction D2 with respect to the valve needle 20 and the valve body 10 from the first position. In particular, when the needle 20 has reached the closing position, armature 30 decouples from the flange 220 and moves further in the second direction D2 against the bias of the elastic member 40. The bias of the elastic member 40 slows down the armature 30 until it comes to a rest in a second position shown in figure 3. In the second position, the armature 30 is axially spaced from the flange 220 of the valve needle 20.

On the way from the first position to the second position, one portion of the first kinetic energy of the armature 30 is transferred to the elastic member 40 and increases the potential energy of the elastic member 40. Specifically, the axial offset between the first and second ends 4110 and 4120 of the beams 410 is further reduced as compared to a configuration of the valve assembly 1 when the armature 30 is in the first position (as in figure 2). Further, in the present embodiment the beams 410 are deformed by the armature 30 in such way, that also a radial distance d_{R} of the first ends 4110 from the valve needle 20 decreases when the armature 30 moves in the second direction D2. When the armature 30 is in the second position, the first ends 4110 of the beams 410 are in direct contact with the needle, i.e. the radial distance d_{R} equals 0.

Another portion of the first kinetic energy of the armature 30 is dissipated. Specifically, when the armature 30 moves from the first position to the second position, the first ends 4110 of the beams move radially with respect to the surface of the armature 30 which they abut. This movement involves friction between the first ends 4110 and the armature 30 so that kinetic energy of the armature is dissipated. Further, energy is dissipated by friction between the first ends 4110 and the needle 20 when the beams 410 reach the surface of the needle 20. Further, in particular due to the change in axial offset d_{A} between the first and the second ends 4110, 4120, the beams 410 compress and displace fuel, for example towards the ring section 420, towards the first shoulder 101 of the valve body 10 and/or through the slots 430, which involves further dissipation of energy.

In this way, the first kinetic energy which the armature 30 has when it initially reaches the first position during the closing event is only partially transformed into potential energy of the elastic member. Rather, a portion of the kinetic energy is dissipated.

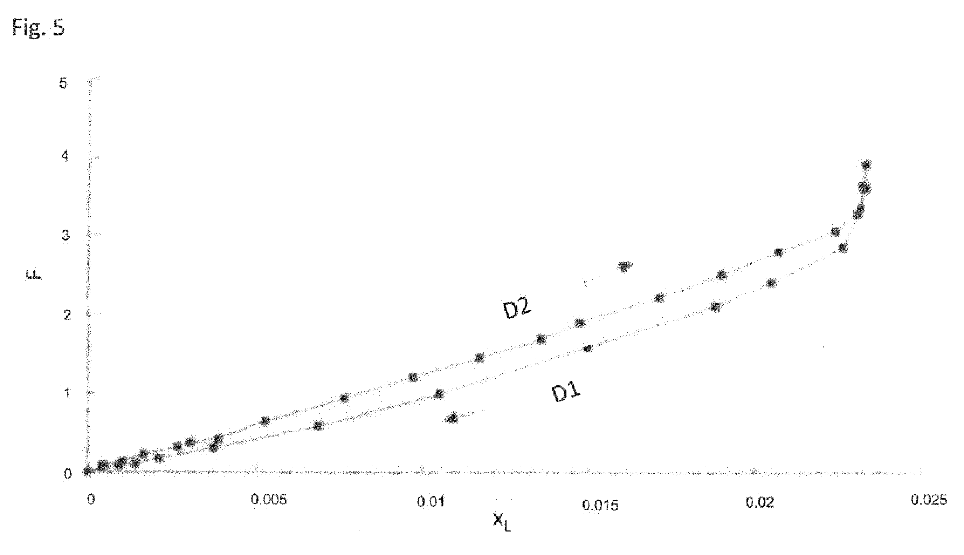

This hysteresis can be seen in figure 5 which shows the load deflection curve - sometimes also called stress-strain curve - of the elastic member 40.

A certain deflection x_{L} of the elastic member 40 in longitudinal direction L corresponds to a larger force F when deflecting the in the second direction D2 than when deflecting in the first direction D1. This means that the energy required to compress the elastic member 40 by a certain axial distance is higher than the energy which the elastic member 40 sets free on relaxation by the same distance.

Figure 5 also shows that the load deflection curve is basically linear over almost the complete deflection range. This means that the spring force depends only on the deflection difference, but not on the absolute value of the deflection. In this way, the valve assembly 1 is particularly insensible to mounting or manufacturing tolerances.

From the second position, driven by the bias of the elastic member 40, the armature 30 moves back in the first direction D1 with respect to the valve needle 20 and the valve body 10 towards the first position during the closing event of the valve assembly 1. When it has reached the first position again, the armature 30 hits the flange 220 of the valve needle 20 with a second kinetic energy thereby transferring energy to the valve needle 20 and exerting a certain force on the valve needle 20 in the first direction D1.

Since some of the first kinetic energy has been dissipated during the movement from the first to the second position, the second kinetic energy has a smaller value than the first kinetic energy. Therefore, the energy transferred to the valve needle 20 during the armature-needle bounce is particularly low. In particular, it is insufficient to overcome the bias of the spring 50 in the second direction D2, so that the needle 20 does not move out of the closing position and the nozzle 130 remains sealed.

## Claims

1. Valve assembly (1) for a fuel injector comprising a valve body (10) having a longitudinal axis (L), a valve needle (20), an armature (30) and an elastic member (40), the valve needle (20) and the armature (30) being axially movable with respect to the valve body (10) in a first direction (D1) and in a second direction (D2), opposite the first direction (D1), wherein
- the armature (30) is biased in the first direction (D1) by means of the elastic member (40),
- the needle (20), when moving in the second direction (D2) to a closing position, is operable to mechanically interact with the armature (30) for moving the armature (30) in the second direction (D2) to a first position against the bias of the elastic member (40),
- the armature (30) is axially moveable with respect to the needle (20) so that, when the needle (20) is in the closing position, the armature (30) is movable from the first position further in the second direction (D2) to a second position against the bias of the elastic member (40),
- the elastic member (40) has a plurality of beams (410), each beam having a first end (4110) and a second end (4120) which are axially and radially offset with respect to each other, and
- the armature (30) is operable to reduce the axial offset (d_{A}) between the first end (4110) and the second end (4120) when moving from the first to the second position, **characterized in that**
the elastic member (40) radially surrounds the needle (20) and is formed in such fashion that the first ends (4110) of the beams (410) are facing the needle (20) and are arranged at a radial distance (d_{R}) from the needle when the armature (30) is in the first position, and
- the beams (410) are elastically deformable in such fashion that the radial distance (dₖ) between the first ends (4110) and the needle (20) decreases when the armature (30) moves from the first to the second position.

2. The valve assembly (1) of claim 1, wherein at least one of the first ends (4110) abuts the needle (20) when the armature (30) is in the second position.

3. The valve assembly (1) of one of the preceding claims, wherein the beams (410) are arranged evenly spaced around the needle (20) in a top view along the longitudinal axis (L).

4. The valve assembly (1) of one of the preceding claims, wherein the elastic member (40) has the basic shape of a conical shell with an upper inner edge (401) and a lower outer edge (402), the upper inner edge (401) facing the armature (30) and the lower outer edge (402) residing against the valve body (10) or vice versa.

5. The valve assembly (1) of claim 4, wherein the upper inner edge (401) is discontinuous and is formed by the first ends (4110) of the beams (410).

6. The valve assembly (1) of claim 5, wherein the elastic member (40) has a circumferential ring section (420), the ring section (420) comprises the lower outer edge (402) and the beams (410) are anchored to the ring section (420) at their second ends (4120).

7. The valve assembly (1) of one of the preceding claims wherein the elastic member (40) is provided to bias the armature (30) with a force in the first direction (D1), the force being independent of an axial position of the armature (30).

8. The valve assembly (1) of one of the preceding claims, wherein the valve assembly (1) is configured for dissipating kinetic energy of the armature (30) when the armature is moving from the first towards the second position by means of mechanical interaction of the elastic member (40) with the armature (30) and/or the needle (20) and/or the fuel.

9. Fuel injector comprising a valve assembly (1) according to one of the preceding claims.

## Patentansprüche

1. Ventilanordnung (1) für ein Brennstoffeinspritzvorrichtung, aufweisend einen Ventilkörper (10) mit einer Längsachse (L), einer Ventilnadel (20), einem Anker (30) und einem elastischen Element (40), wobei die Ventilnadel (20) und der Anker (30) in Bezug auf den Ventilkörper (10) in einer ersten Richtung (D1) und in einer zweiten Richtung (D2), die entgegengesetzt zu der ersten Richtung (D1) verläuft, axial beweglich sind, wobei
- der Anker (30) in der ersten Richtung (D1) mithilfe des elastischen Elements (40) vorgespannt ist,
- die Nadel (20), wenn sie sich in die zweite Richtung (D2) zu einer Schließposition bewegt, betrieben werden kann, um mechanisch mit dem Anker (30) zum Bewegen des Ankers (30) in die zweite Richtung (D2) zu einer ersten Position gegen die Vorspannung des elastischen Elements (40) zusammenzuwirken,
- der Anker (30) in Bezug auf die Nadel (20) axial beweglich ist, sodass, wenn sich die Nadel (20) in der Schließposition befindet, der Anker (30) von der ersten Position weiter in die zweite Richtung (D2) zu einer zweiten Position gegen die Vorspannung des elastischen Elements (40) bewegt werden kann,
- wobei das elastische Element (40) eine Vielzahl von Streben (410) aufweist, wobei jede Strebe ein erstes Ende (4110) und ein zweites Ende (4120) aufweist, die axial und radial in Bezug aufeinander versetzt sind, und wobei
- der Anker (30) betrieben werden kann, um den axialen Versatz (d_{A}) zwischen dem ersten Ende (4110) und dem zweiten Ende (4120) zu reduzieren, wenn er sich von der ersten zu der zweiten Position bewegt, **dadurch gekennzeichnet, dass** das elastische Element (40) die Nadel (20) radial umgibt und in einer solchen Weise gebildet ist, dass die ersten Enden (4110) der Streben (410) zur Nadel (20) weisen und in einem radialen Abstand (d_{R}) von der Nadel angeordnet sind, wenn sich der Anker (30) in der ersten Position befindet, und wobei
- die Streben (410) elastisch auf solche Weise verformbar sind, dass der radiale Abstand (d_{R}) zwischen den ersten Enden (4110) und der Nadel (20) abnimmt, wenn sich der Anker (30) von der ersten zu der zweiten Position bewegt.

2. Ventilanordnung (1) nach Anspruch 1, wobei mindestens eines der ersten Enden (4110) an die Nadel (20) angrenzt, wenn sich der Anker (30) in der zweiten Position befindet.

3. Ventilanordnung (1) nach einem der vorhergehenden Ansprüche, wobei die Streben (410) gleichmäßig um die Nadel (20) in einer Draufsicht entlang der Längsachse (L) beabstandet angeordnet sind.

4. Ventilanordnung (1) nach einem der vorhergehenden Ansprüche, wobei das elastische Element (40) die Grundform eines Kegelmantels mit einer oberen Innenkante (401) und einer unteren Außenkante (402) hat, wobei die obere Innenkante (401) zum Anker (30) weist und die untere Außenkante (402) am Ventilkörper (10) anliegt oder umgekehrt.

5. Ventilanordnung (1) nach Anspruch 4, wobei die obere Innenkante (401) unterbrochen ist und durch die ersten Enden (4110) der Streben (410) gebildet wird.

6. Ventilanordnung (1) nach Anspruch 5, wobei das elastische Element (40) einen umlaufenden Ringabschnitt (420) hat, wobei der Ringabschnitt (420) die untere Außenkante (402) aufweist und die Streben (410) am Ringabschnitt (420) an ihren zweiten Enden (4120) verankert sind.

7. Ventilanordnung (1) nach einem der vorhergehenden Ansprüche, wobei das elastische Element (40) zum Vorspannen des Ankers (30) mit einer Kraft in der ersten Richtung (D1) bereitgestellt ist, wobei die Kraft unabhängig von der axialen Position des Ankers (30) ist.

8. Ventilanordnung (1) nach einem der vorhergehenden Ansprüche, wobei die Ventilanordnung (1) zum Abgeben von kinetischer Energie des Ankers (30) ausgebildet ist, wenn sich der Anker von der ersten zu der zweiten Position durch mechanische Einwirkung des elastischen Elements (40) mit dem Anker (30) und/oder der Nadel (20) und/oder dem Brennstoff bewegt.

9. Brennstoffeinspritzvorrichtung, umfassend eine Ventilanordnung (1) nach einem der vorhergehenden Ansprüche.

## Revendications

1. Ensemble de soupape (1) destiné à un injecteur de carburant, comprenant un corps de soupape (10) présentant un axe longitudinal (L), un pointeau de soupape (20), une armature (30) et un élément élastique (40), le pointeau de soupape (20) et l'armature (30) étant mobiles axialement par rapport au corps de soupape (10) dans une première direction (D1) et dans une seconde direction (D2), opposée à la première direction (D1), dans lequel:
l'armature (30) est poussée dans la première direction (D1) au moyen de l'élément élastique (40),
le pointeau (20), lorsqu'il se déplace dans la seconde direction (D2) vers une position de fermeture, est actionnable pour interagir mécaniquement avec l'armature (30) pour déplacer l'armature (30) dans la seconde direction (D2) jusqu'à une première position contre la poussée de l'élément élastique (40),
l'armature (30) est mobile axialement par rapport au pointeau (20) de telle sorte que, lorsque le pointeau (20) se trouve dans la position de fermeture, l'armature (30) soit déplaçable depuis la première position plus loin dans la seconde direction (D2) jusqu'à une seconde position contre la poussée de l'élément élastique (40),
l'élément élastique (40) comprend une pluralité de poutres (410), chaque poutre présentant une première extrémité (4110) et une seconde extrémité (4120) qui sont décalées axialement et radialement l'une par rapport à l'autre, et
l'armature (30) est actionnable pour réduire le décalage axial (d_{A}) entre la première extrémité (4110) et la seconde extrémité (4120) lors du déplacement de la première position vers la seconde position,
**caractérisé en ce que**:
l'élément élastique (40) entoure radialement le pointeau (20) et est formé de telle sorte que les premières extrémités (4110) des poutres (410) soient situées en face du pointeau (20) et soient agencées à une distance radiale (d_{R}) du pointeau lorsque l'armature (30) se trouve dans la première position, et
les poutres (410) sont élastiquement déformables de telle sorte que la distance radiale (d_{R}) entre les premières extrémités (4110) et le pointeau (20) diminue lorsque l'armature (30) se déplace de la première vers la seconde position.

2. Ensemble de soupape (1) selon la revendication 1, dans lequel au moins une des premières extrémités (4110) bute contre le pointeau (20) lorsque l'armature (30) se trouve dans la seconde position.

3. Ensemble de soupape (1) selon l'une des revendications précédentes, dans lequel les poutres (410) sont agencées de façon uniformément espacée autour du pointeau (20) dans une vue du dessus le long de l'axe longitudinal (L).

4. Ensemble de soupape (1) selon l'une des revendications précédentes, dans lequel l'élément élastique (40) présente la forme de base d'une coquille conique avec un bord intérieur supérieur (401) et un bord extérieur inférieur (402), le bord intérieur supérieur (401) faisant face à l'armature (30) et le bord extérieur inférieur (402) résidant contre le corps de soupape (10), ou vice versa.

5. Ensemble de soupape (1) selon la revendication 4, dans lequel le bord intérieur supérieur (401) est discontinu et est formé par les premières extrémités (4110) des poutres (410).

6. Ensemble de soupape (1) selon la revendication 5, dans lequel l'élément élastique (40) présente une section annulaire circonférentielle (420), la section annulaire (420) comprend le bord extérieur inférieur (402), et les poutres (410) sont ancrées à la section annulaire (420) à leurs secondes extrémités (4120).

7. Ensemble de soupape (1) selon l'une des revendications précédentes, dans lequel l'élément élastique (40) est conçu de manière à pousser l'armature (30) avec une force dans la première direction (D1), la force étant indépendante d'une position axiale de l'armature (30).

8. Ensemble de soupape (1) selon l'une des revendications précédentes, dans lequel l'ensemble de soupape (1) est configuré de manière à dissiper l'énergie cinétique de l'armature (30) lorsque l'armature se déplace de la première position en direction de la seconde position au moyen d'une interaction mécanique de l'élément élastique (40) avec l'armature (30) et/ou le pointeau (20) et/ou le carburant.

9. Injecteur de carburant comprenant un ensemble de soupape (1) selon l'une des revendications précédentes.
